# EUROPEAN PATENT SPECIFICATION

(11) **EP 3 047 092 B1**
(45) Date of publication and mention of the grant of the patent: **13.12.2023**
(21) Application number: 14771319.2
(22) Date of filing: 19.09.2014
(51) Int. Cl.: E21B 21/12, E21B 4/14, E21B 17/042, E21B 17/18, E21B 21/10

(54) **DRILL ROD FOR PERCUSSION DRILL TOOL**
BOHRSTANGE FÜR SCHLAGBOHRER
TIGE DE FORAGE POUR OUTIL DE FORAGE À PERCUSSION

(30) Priority: 19.09.2013 GB 201316631
(43) Date of publication of application: 27.07.2016
(73) Proprietor: Mincon International Ltd., Co. Clare (IE)
(72) Inventor: PURCELL, Joseph, Co. Clare (IE); KOSOVICH, John, Co. Clare (IE); WANG, Tony, Co. Clare (IE)
(74) Representative: Tomkins & Co
(86) International application number: PCT/EP2014/070059
(87) International publication number: WO 2015/040196

(56) References cited:
- EP-A1- 0 022 865
- EP-A2- 0 808 987
- WO-A1-96/08632
- DE-C1- 4 027 414
- GB-A- 2 481 848
- US-A1- 2012 247 839

## Description

### Field of the Invention

The present invention relates to fluid-powered apparatus such as percussion drill tools, including down-the-hole hammers, and, in particular, to drill rods for liquid-powered down-the-hole hammers.

### Background to the Invention

The drilling of holes in high-strength rock using down-the-hole (DTH) percussive hammers is a well-established technique. There are a variety of such hammers in common use, for a wide variety of drilling applications. Virtually all of these commonly used hammers are of an "open circuit" design, in which a pressurised fluid is used to transmit energy to the hammer and then the same fluid, once it has been exhausted from the percussion mechanism, is used to flush the drill cuttings from the hole being drilled. Air is the most commonly used fluid in such hammers, and, in most cases, is a very suitable flushing medium. However, such pneumatically powered hammers are energy inefficient and often suffer performance constraints, especially when drilling small diameter holes.

In an effort to improve energy efficiency and performance, liquid-powered hammers have been developed. These include both open circuit water powered designs and designs that use special fluids known as drilling "muds". These liquid-powered designs have shown significant advantages over pneumatic designs in relation to both energy efficiency and performance. However, there are a number of disadvantages of open circuit designs, even those that are liquid powered.

A first disadvantage is that there is no independent control of the flushing flow rate vs. the percussion mechanism flow rate. The minimum flushing flow rate is the percussion flow rate. However, the fluid flow rate required to efficiently flush the hole may vary greatly from that needed to efficiently drive the percussion mechanism. Whenever there is a large variance between the two requirements, energy will be wasted and/or hammer performance will be compromised.

Another disadvantage is that the choice of fluid to drive the hammer is limited to those that are suitable for both driving the percussion mechanism and flushing the hole. This almost always results in the use of a fluid that is not optimal for either purpose. For instance, oil is the preferred fluid to drive the percussion mechanism as it has a wide working temperature range, and good lubrication and anti-corrosion properties. However, for obvious environmental and economic reasons, it is not suitable for flushing the drilled hole. On the other hand, water may be suitable for flushing the hole, but is generally a poor choice for use in the percussion mechanism.

A further disadvantage of open circuit systems is that the fluid chosen to drive the hammer must be available in large quantities, or must be recycled once it exits the drilled hole. This is a significant disadvantage for many drilling applications, since either the drill rig must be connected to an adequate supply of fresh fluid or it must utilise a complicated fluid capture and filtration system. In most situations, both are required, significantly reducing the mobility of such rigs.

In an effort to overcome these disadvantages, while retaining the performance and energy efficiency advantages of liquid-powered hammers, hammers that operate on a "closed-circuit" principle have been proposed. In these designs, the flushing fluid flow is separate from the pressure fluid flow used to drive the hammer. The pressure fluid, rather than being exhausted into the drilled hole, is returned directly to the prime mover for reuse, as a return fluid flow. There are many advantages of this arrangement.

A first advantage is that the flushing and pressure fluid flows may be independently controlled. Another advantage is that suitable fluids may be chosen for each of the percussion fluid flow and the flushing fluid flow, including combinations that utilise a gaseous flushing medium. In most cases, the preferred combination will be oil/air, or in some applications, oil/water, both of which are referred to as hydraulic DTH. A further advantage is that if clean flushing fluid is not available in sufficient quantities it may be recycled without the stringent cleanliness requirements of open circuit designs. Yet another advantage is that drill rig mobility is improved, because large supplies of fresh fluid or recycling systems are not required.

However, despite their advantages, closed circuit liquid-powered hammers have not found common use to date. The main reason for this is that the drill rods required to feed such hammers are complex and must fulfil a number of requirements. First, the drill rods must create three discrete fluid flow paths simultaneously on connection for the pressure, return and flushing fluid, and must reliably seal between the various flow paths during operation. The rods must also be robust enough to offer adequate service life in typical drilling environments. For drill rods to be used in hydraulic hammers, that is, where the percussion fluid is oil, they must be capable of storing the working fluid internally, without leakage, when disconnected, and must not allow the loss of significant quantities of working fluid while being connected or disconnected. The rods must also offer minimal restriction to all three fluid flows during use, since if the pressure loss between successive drill rods is excessive, the energy saving features of the hammer will be negated.

European Patent Application Publication No. 0 571 346 discloses a drill string component with three coaxial tubes that can be used with a liquid driven down-the-hole drill. The three tubes carry the three flows required for operation of the hammer. There are sealing arrangements between the tubes of adjacent rods to stop cross leakage between the flows while the rods are connected. However, there is no provision for storing the working fluid once adjacent rods are disconnected, which renders the drill rod disclosed in this document unsuitable for hydraulic DTH.

German Patent No. DE 40 27 414 discloses a concentric-style drill rod which has sealing arrangements to prevent fluid loss on disconnection. However, the design requires two moving parts in each half of the rod connections, to seal the pressure fluid and return fluid paths respectively. This reduces the strength of the connection between the hydraulic components, detrimentally affecting their reliability. Furthermore, the hydraulic components are not fully enclosed within the outer tube, which leaves them susceptible to damage.

International Patent Application Publication No. WO 96/08632 discloses a drill rod with side-by-side fluid paths with one moving part in each half of the rod connections and where the hydraulic connections are fully enclosed by the outer tube. It also includes closing means which close the hydraulic fluid transmitting paths when the rods are detached and automatically open the paths when the rods are connected to one another. However, the design has a very long engagement length of the hydraulic components and no adequate means of ensuring concentricity and angular alignment of the components as they engage. These disadvantages are further magnified by the fact that the seals in the connections sweep over ports as the components engage, thereby reducing reliability of the connection. In very cold or very hot climatic conditions, the connection is exposed to the negative effects of differential thermal expansion of the various components, which it does not allow for. Also, while there is only one moving component in each half of the connection, in one half it is the innermost component and in the other half, it is a surrounding component. This means that it is difficult to maintain sufficient open area to ensure that the pressure losses across the connection during operation are within acceptable limits.

UK Patent Application Publication No. GB 2481848 relates to drilling equipment and self-sealing drill rods. United States Patent Application Publication No. US 2012/0247839 relates to a drilling apparatus. European Patent Application Publication No. EP 0 022 865 relates to a hydraulically driven downhole drill.

### Summary of the Invention

The invention is defined by the subject-matter of the independent claims. Preferred embodiments are defined in the dependent claims.

According to an aspect of the present invention, there is provided a drill rod for a fluid-operated apparatus, the drill rod comprising:
a first connection interface at a first end and a second connection interface at a second end, wherein the first connection interface is for connection of the drill rod to a second connection interface of a like drill rod or to the fluid-operated apparatus, and the second connection interface is for connection of the drill rod to a first connection interface of a like drill rod or to a fluid transfer device;
a plurality of discrete fluid flow channels through the drill rod, including at least a pressure fluid channel and a return fluid channel;
at least one hydraulic component in the first connection interface, wherein the hydraulic component is a component having a pressure fluid path therethrough and having an outlet for pressure fluid at an outwardly directed end thereof, wherein the term outward indicates outward in an axial direction of the drill rod, and wherein the hydraulic component in the first connection interface has a first planar end face; and
at least one hydraulic component in the second connection interface, wherein the hydraulic component is a component having a pressure fluid path therethrough and having an inlet for pressure fluid at an outwardly directed end thereof, and wherein the hydraulic component in the second connection interface has a second planar end face;
wherein the pressure fluid path in the at least one hydraulic component in the first connection interface and the pressure fluid path in the at least one hydraulic component in the second connection interface form part of the pressure fluid channel; and
wherein when the drill rod is connected to a like drill rod, the outlet for pressure fluid of the at least one hydraulic component in the first connection interface is placed in fluid communication with the inlet for pressure fluid of the at least one hydraulic component in the second connection interface of the like drill rod, the return fluid flow channel is placed in fluid communication with corresponding channel of the like drill rod or the fluid-operated apparatus or the fluid transfer device and the first planar end face of the drill rod is in close proximity to the second planar end face of the like drill rod, and
wherein a face seal is provided on at least one of the first and second planar end faces wherein, when a pressure in the pressure fluid channel is higher than a pressure in the return fluid channel, at least one of the first and second hydraulic components moves in an axial direction such that the first planar end face of the first hydraulic component in the drill rod is maintained in contact with the second planar end face of the second hydraulic component of the first like drill rod or the fluid-operated apparatus;
the drill rod further comprising:
   a first member moveably mounted in the first connection interface;
   a second member moveably mounted in the second connection interface;
   wherein the first moveable member is the innermost component in the first connection interface and the second moveable member is the innermost component in the second connection interface and, when the drill rod is connected to the like drill rod or to the fluid-operated apparatus or to the fluid transfer device, the fluid flow channels are placed in fluid communication with corresponding channels of the like drill rod or the fluid-operated apparatus or the fluid transfer device by movement of the first and second moveable members only.

The term "innermost" used herein indicates that each of the moveable members is the closest component in its respective connection interface to the centreline of the drill rod, that is, no other component is disposed or received within the moveable member.

In one embodiment, the first connection interface is a female connection interface and the second connection interface is a male connection interface. In alternate embodiments, this arrangement may be reversed. The drill rod of the present invention is ideally suited for use with a fluid-operated percussion drill tool such as a hydraulic down-the-hole hammer, but may also be used with any other fluid-powered device that needs to operate remotely. The fluid transfer device may also be a rotation device.

An advantage of this arrangement is that, by locating the moveable members along the centreline of the drill rod, when adjacent drill rods are connected so that at least two fluid flow channels are placed in fluid communication, the fluid flows as close to the centreline of the drill rod as possible. This allows maximum strength of the drill rod to be maintained while also maximising the area through which fluid may flow, thereby keeping pressure loss to a minimum.

In certain embodiments, when the drill rod is connected to a like drill rod or to the apparatus, there is substantially no overlap between the moveable members in an axial (longitudinal) direction of the drill rod.

This means, for example, that neither of the first and second moveable members is received within the other or overlaps the other in an axial (longitudinal) direction. In a preferred embodiment, the first moveable member has a substantially planar end face and the second moveable member has a substantially planar end face, and when the drill rod is connected to a like drill rod or the apparatus, the planar end faces abut one another.

An advantage of this arrangement is that, because there is no overlap between the moveable components, the cross-sectional area of the drill rod taken up by the moveable components is minimised, thereby allowing the open area (i.e. the area through which fluid may flow) to be maximised. This ensures that the pressure loss at each connection interface is kept to a minimum.

In an embodiment, the first moveable member is biasedly mounted in the first connection interface and the second moveable member is biasedly mounted in the second connection interface, such that when the drill rod is disconnected from like drill rods or the apparatus or from the fluid transfer device, the at least two fluid flow channels are sealed by the first and second moveable members. So when a drill rod is disconnected at the first end of the rod from a like drill rod or fluid operated apparatus, the at least two fluid flow channels are sealed by the first moveable member. When a drill rod is disconnected at the second end of the rod from a like drill rod or from the fluid transfer device, the at least two fluid flow channels are sealed by the second moveable member.

An advantage of this arrangement is that when the drill rods are disconnected, fluid contained in each drill rod is stored therein, thereby avoiding fluid loss on disconnection.

In an embodiment of the invention, the plurality of discrete fluid flow channels are concentrically arranged over at least a substantial portion of the length of the drill rod. This allows each fluid path to be as straight as possible, thereby avoiding pressure loss through the drill rod.

According to an embodiment of the invention, the drill rod further comprises:
an outer tube;
a middle tube, concentrically mounted within the outer tube; and
a centre tube, concentrically mounted within the middle tube;
wherein the tubes provide three discrete fluid flow channels through the drill rod, and wherein the outer tube extends axially (longitudinally) beyond the ends of the middle tube and the centre tube.

Because the outer tube extends beyond the middle and centre tubes, potential damage to the middle and centre tubes is avoided.

In an embodiment, the first connection interface includes a female tool joint having a tapered thread at a first end of the outer tube and the second connection interface includes a male tool joint having a tapered thread at a second end of the outer tube, and the female tool joint is for threaded connection of the drill rod to a male tool joint of a like drill rod or to the apparatus, and the male tool joint is for threaded connection to a female tool joint of a like drill rod or to a fluid transfer device. In alternate embodiments, the female thread may be provided in the second connection interface and the male thread may be provided on the first connection interface.

An advantage of this arrangement is that the tapered thread has an aligning effect on the drill rods as they are brought together, allowing them to engage with one another even where there is significant axial misalignment.

In one embodiment, when the drill rod is connected to a like drill rod, or to the apparatus, or to the fluid transfer device, there is no overlap between the hydraulic components in an axial (longitudinal) direction of the drill rod.

The term "hydraulic component" used herein indicates a component through which working fluid may flow. The term "outward" used herein indicates outward in an axial or longitudinal direction of the drill rod (rather than a radial direction).

An advantage of this arrangement is that because there is no overlap between the hydraulic components in the first and second connection interfaces, the requirement to carefully control the concentricity of the connection interfaces as they are brought together is obviated. Since the components do not overlap, radial seals are not required and thus damage to such seals as the components move over one another is no longer a concern.

A face seal is a seal in which the sealing surfaces are normal to the axis of the seal, that is, it effects a seal by interacting primarily in a longitudinal or axial direction between the first and second end faces. The face seal may be provided in an annular recess on the first or second planar end face. The face seal may encircle at least one of the outlet for pressure fluid or the inlet for pressure fluid.

An advantage of this arrangement is that use of a face seal between two end faces which abut one another is significantly more tolerant of axial (parallel) misalignment between adjacent drill rods on connection than the radial seals in the prior art. This means that even if the central axes of adj acent rods are offset from one another on connection, a reliable seal can still be achieved. Face seals are also less prone to damage during connection than radial seals.

An embodiment of the invention will now be described with reference to the accompanying drawings.

### Brief Description of the Drawings

Figure 1 is a cross-sectional view of a hydraulic down-the-hole drilling system, including drill rods according to the present invention;
Figure 2 is a cross-sectional view of the components of a drill rod according to an embodiment of the present invention, in a disassembled state;
Figure 3 is a cross-sectional view of the drill rod of Figure 2, assembled;
Figure 4 is a cross-sectional view of two adjacent drill rods coming together to make a connection;
Figure 5 is a cross-sectional view of the drill rods of Figure 4, partially engaged;
Figure 6 is a cross-sectional view of the drill rods of Figure 4, fully engaged;
Figure 7 is a cross-sectional view of a portion of the drill rods of Figure 6, illustrating the pressure fluid flow path through the connection;
Figure 8 is a cross-sectional view of a portion of the drill rods of Figure 6, illustrating the return fluid flow path through the connection;
Figure 9a is a cross-sectional view of Figure 6, taken along line A-A;
Figure 9b is a cross-sectional view of Figure 6, taken along line B-B; and
Figure 9c is a cross-sectional view of Figure 6, taken along line C-C.

### Detailed Description of the Drawings

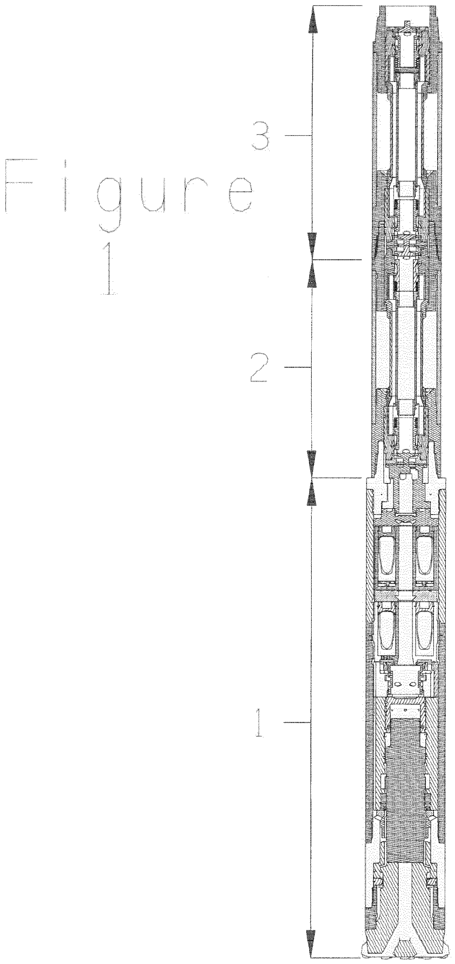

A hydraulic down-the-hole drilling system incorporating two drill rods 2, 3 according to the present invention is shown in Figure 1. The system includes a hammer 1, which is fed pressure fluid and flushing fluid and which discharges return fluid through drill rods 2,3.

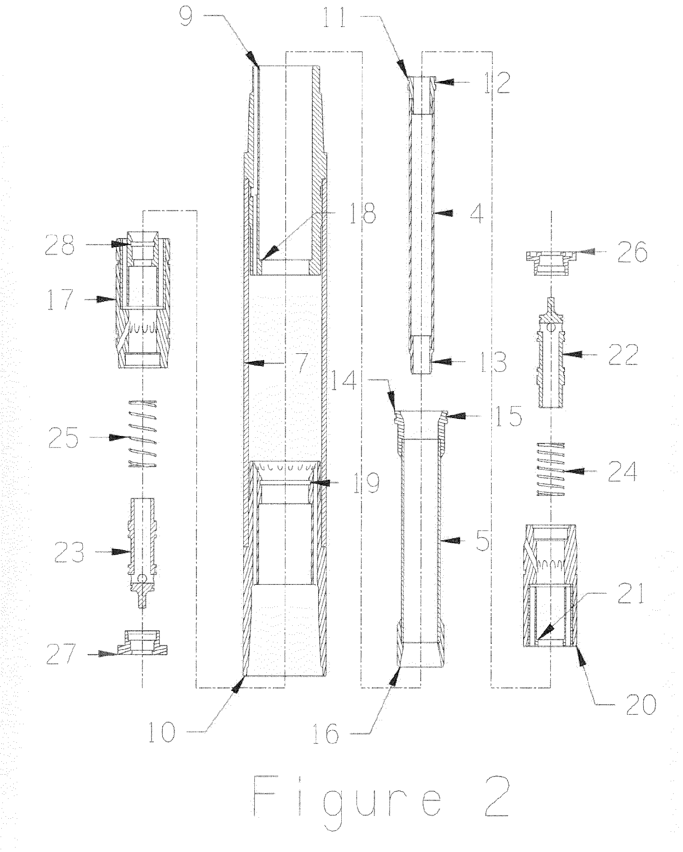

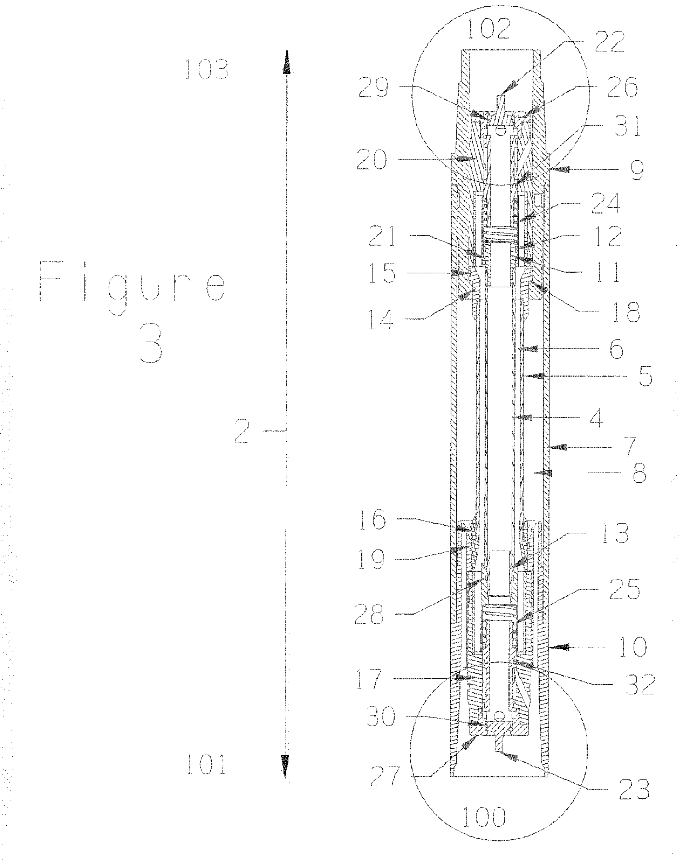

Figures 2 and 3 show a drill rod 2 according to an embodiment of the present invention. The drill rod 2 has a female connection interface 100 at a first end 101 and a male connection interface 102 at a second end 103. The female connection interface 100 is for connection of the drill rod 2 to a male connection interface 102 of a like drill rod 3 or to the hammer 1, as shown in Figure 1. The drill rod 2 has a plurality of discrete fluid flow channels 4, 6, 8 provided by a concentric tube structure. The drill rod comprises a centre tube 4, which carries pressure fluid, and which is surrounded by middle tube 5. Return fluid is carried in an annular channel 6 between centre tube 4 and the middle tube 5. The middle tube is surrounded by outer tube 7. Flushing fluid is carried in an annular channel 8 between middle tube 5 and outer tube 7.

The female connection interface 100 includes a strengthened housing or female tool joint 10 welded to a first end of outer tube 7. The female tool joint is generally cylindrical in form and has an internal bore provided therein. A tapered thread is provided on an inner wall of the tool joint. The male connection interface 102 includes a strengthened housing or male tool joint 9 welded to a second end of the outer tube 7. The male tool joint is generally cylindrical in form and has a tapered thread provided on an outer wall thereof. The female tool joint 10 is for threaded connection of the drill rod 2 to a male tool joint 10 of a like drill rod or to the hammer 1, and the male tool joint 9 is for threaded connection to a female tool joint 10 of a like drill rod 3 or to a rotation device, as shown in Figure 1. In alternate embodiments, the tool joints may be fixed to the outer tube by means other than welding.

An end piece 13 is provided at a first end of centre tube 4. At a second end of the centre tube 4, a seal carrier 11 is welded to the tube and fitted with a seal 12. Similarly, an end piece 16 is welded to a first end of middle tube 5 and a seal carrier 14, fitted with a seal 15, is welded to a second end of middle tube 5. In alternate embodiments, the end pieces may be fixed to the centre and middle tubes by means other than welding.

The drill rod 2 is assembled by first pushing a female hydraulic insert 17 into the female tool joint 10 until an end of the insert 17 abuts an inwardly directed shoulder in the female tool joint 10. The middle tube 5 is then fed into the outer tube 7 through the male tool joint 9 until the seal carrier 14 abuts an inwardly directed shoulder 18 in the male tool joint 9. The seal 15 engages the internal wall of the tool joint 9. When the middle tube 5 is in position, its end piece 16 engages a radial seal 19 provided in a circumferential groove in the internal wall of female tool joint 10. A male hydraulic insert 20 is then pushed into the male tool joint 9 until it abuts seal carrier 14. The centre tube 4 is then fed in through the male hydraulic insert 20 until its seal carrier 11 engages an inwardly directed shoulder 21 provided on hydraulic insert 20. Once the centre tube is in position, its end piece 13 engages a radial seal 28 provided in a circumferential groove in hydraulic insert 17. As shown in Figure 3, when the tubes are assembled, the outer tube 7 extends axially beyond the ends of the middle tube and the centre tube.

The drill rod further comprises a female control spool 23 moveably mounted in the female connection interface 100 and a male control spool 22 moveably mounted in the male connection interface 102. The female control spool 23 is biasedly mounted in the female connection interface 100 by way of spring 25 and the male control spool is biasedly mounted in the male connection interface 102 by way of spring 24. As shown in Figure 3, the female control spool 23 is the innermost component in the female connection interface 100 and the male control spool 22 is the innermost component in the male connection interface 102, that is, no other component is disposed or received within either of the control spools 22, 23.

To complete the assembly, control spools 22 and 23 with their springs 24 and 25 are fed into the male 20 and female 17 hydraulic inserts, respectively, and male 26 and female 27 spool stops are screwed into the male 20 and female 17 hydraulic inserts, respectively. Each of spool stops 26, 27 has a substantially planar end face. Spool stop 27 has an outlet for pressure fluid in its end face and spool stop 26 has an inlet for pressure fluid in its end face. A face seal 34 is provided in an annular recess in the planar end face of spool stop 26, wherein the face seal 34 encircles the inlet for pressure fluid. The threads on these spool stops 26, 27 are made with additional axial clearance so that the spool stops 26, 27 can move a small amount in an axial direction. When 'energised' by the application of pressure the spool stops 26, 27 are brought into contact with each other. Seals 29 and 30 on control spools 22 and 23 ensure that oil contained in centre tube 4 cannot leak externally from the drill rod when the drill rod is disconnected from another drill rod. Seals 31 and 32 on control spools 22 and 23 ensure that oil contained in the annular return flow path 6 cannot leak externally upon disconnection. Thus, when the drill rod is disconnected from like drill rods or the drill tool, the pressure and return fluid flow channels are sealed by the male and female control spools.

Once fully assembled, the centre 4 and middle 5 tubes are fixed in position, due to their engagement with shoulders 21 and 18, respectively, in the male connection interface 102 only. The end pieces 13 and 16 at the opposite ends of the tubes are free to move axially within the seals 28 and 19. This allows for slight length variations in the tubes if they are ever individually replaced, and more importantly, also allows for differential thermal or pressure induced changes in length of the various tubes during operation.

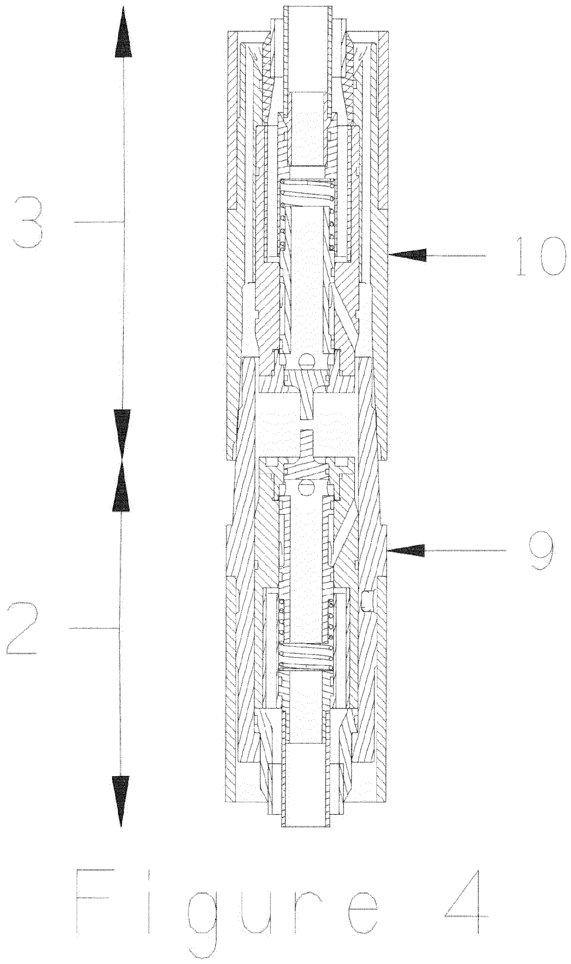

As shown in Figure 4, adjacent drill rods 2, 3 are joined together by engaging the threads of the female tool joint 10 on drill rod 3 with the threads of the male tool joint 9 on drill rod 2, and by rotating rod 3 relative to rod 2.

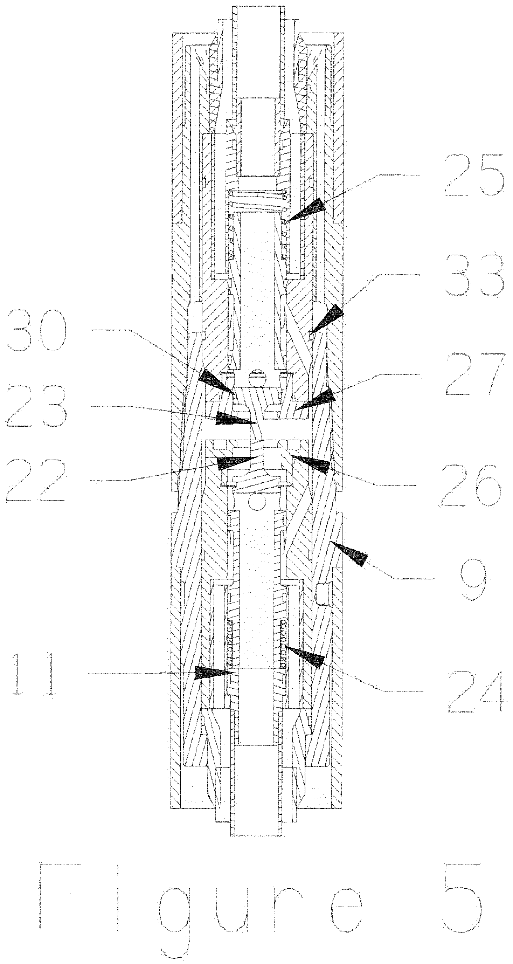

As shown in Figure 5, as the rods come together, control spools 22 and 23 come into contact with one another. As shown in the drawings, each of the control spools has a substantially planar end face, and when the drill rods are brought together, the planar end faces abut one another. Spring 25 applies a higher preload force to female control spool 23 than spring 24 applies to male spool 22. Continued engagement of the threaded connection between the drill rods causes male spool 22 to move away from its spool stop 26 until it contacts seal carrier 11 on centre tube 4, at which point no further movement is possible. Further engagement of the connection causes female control spool 23 to move away from its spool stop 27. At the point shown in Figure 5, male control spool 22 has moved as far as it can and is in contact with seal carrier 11 and female control spool 23 is just about to disengage from spool stop 27. As the female connection interface is at the upstream side of the connection, when the female spool 23 moves off the spool stop 27, oil from centre tube 4 will be released from rod 3 to flood the connection area. This ensures that the connection area is well lubricated prior to the final portion of its travel. At this same position, radial seal 33 provided in a circumferential groove on an outer wall of female hydraulic insert 17 engages with the nose of the male tool joint 9 to ensure that the fluid that floods the connection area cannot leak externally.

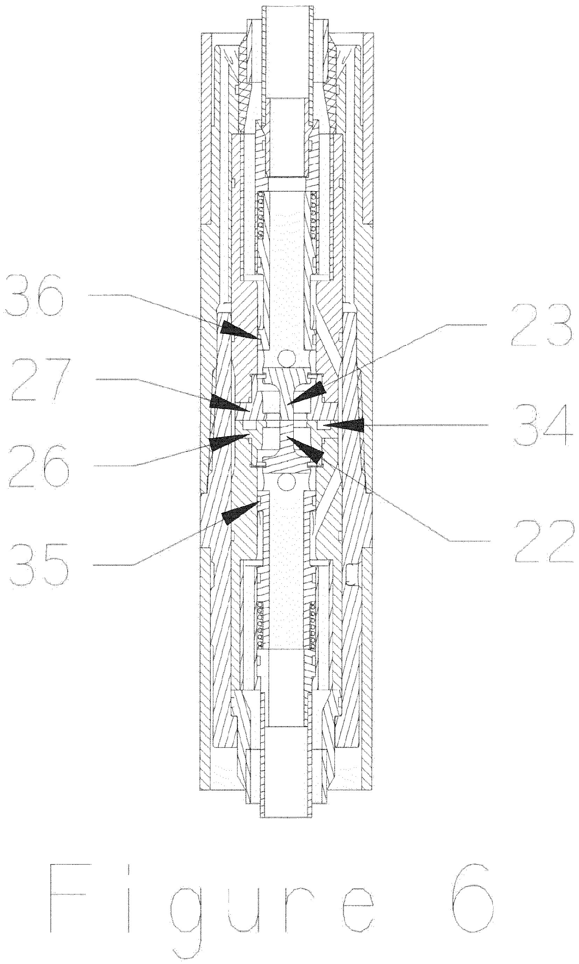

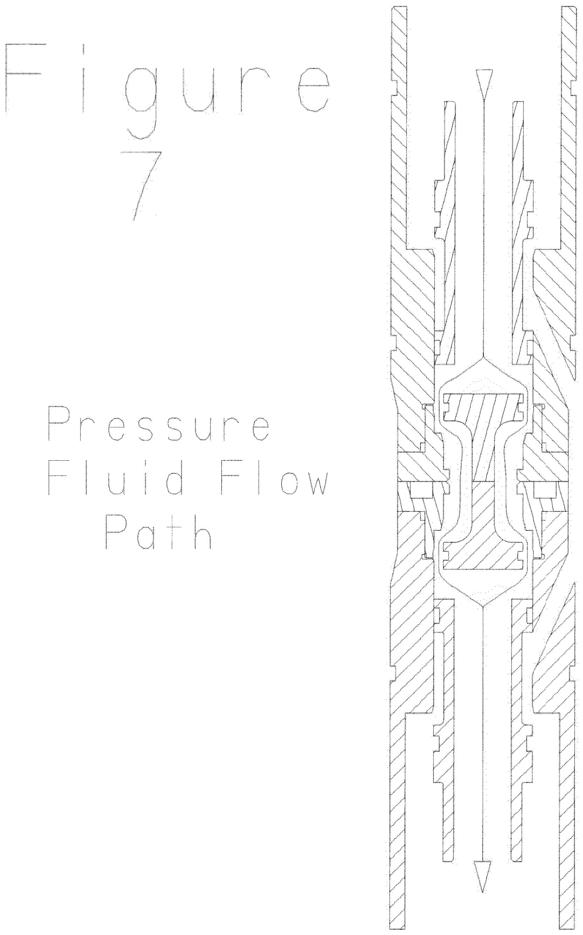

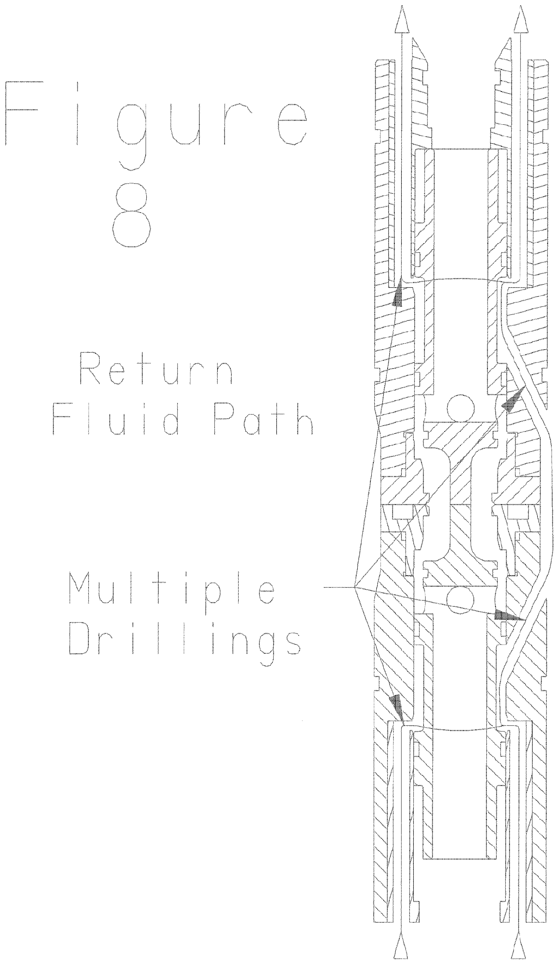

As shown in Figure 6, when the connection is fully engaged, the two spool stops 26, 27 come into very close proximity to each other. The planar end faces of the spool stops abut one another and as shown in the drawing, there is no overlap in a longitudinal or axial direction between either the moveable control spools 22, 23 or the spool stops 26, 27. Face seal 34 on male spool stop 26 engages the planar end face of female spool stop 27 and provides a seal around the pressure fluid flow path at the interface between the drill rods 2,3. In the position shown in Figure 6, the female spool 23 has moved away from its stop 27 by the same distance as male spool 22 from its stop 26, so that the pressure 4 and return 6 fluid flow channels of drill rod 3 are placed in fluid communication with the corresponding channels of drill rod 2 by movement of the control spools only. As shown in Figures 7 and 8, the flow channels are substantially symmetrical.

As shown in Figures 7 and 8, movement of the spools 22, 23 away from their stops 26, 27 opens the pressure and return fluid flow paths substantially simultaneously. The pressure fluid flows through centre tube 4 of drill rod 3 and female control spool 23 and into male control spool 22 and centre tube 4 of drill rod 2. The return fluid flows from annular channel 6 in drill rod 2, into a recess in the outer wall of control spool 22, through multiple drillings in hydraulic insert 20 and then between male tool joint 9 and hydraulic inserts 20 and 17, through drillings in hydraulic insert 17 in drill rod 3, into a recess in the outer wall of control spool 23 and into annular channel 6 in drill rod 3. Upon disconnection, the reverse occurs and the flow paths are closed substantially simultaneously, just before the nose of the male tool joint 9 disengages from seal 33. This ensures that there is no significant loss of hydraulic fluid with each connection/disconnection cycle.

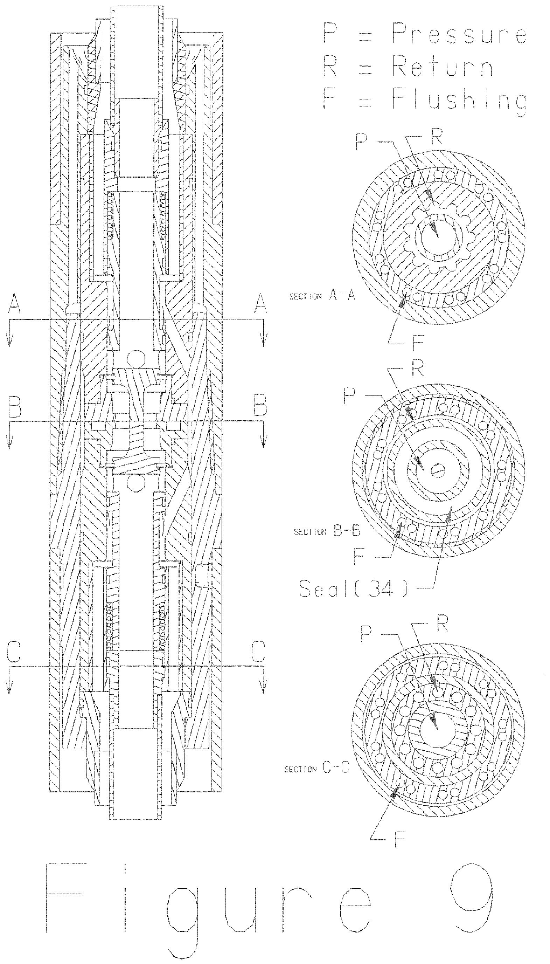

The transverse cross-sections of Figures 9a to 9c show the flushing channels in the form of longitudinal drillings though the male 9 and female 10 tool joints and the return channel drillings in the hydraulic inserts 17, 20.

As set out above, there is only one moveable component in each connection interface, namely, the control spool and there is no overlap between the control spools in an axial direction, i.e. neither moveable component is received within the other. Each moveable component is the innermost component of the connection interface. The movement of the control spools controls both working fluid flows in each half of the connection.

In the embodiment shown in the drawings and described above, pressure fluid flows from a female connection interface in one drill rod to a male connection interface in an adjoining drill rod. In alternate embodiments, the connection interfaces may be reversed so that pressure fluid flows from a male connection interface in one drill rod to a female connection interface in an adjoining drill rod. The only alteration required to the drill rod for this embodiment would be reversal of the springs 24 and 25.

There are a number of advantages associated with this design. It allows a strong tool joint configuration, using industry standard tapered threads, which allow the tool joints to engage and guide the connection together even where there is initial parallel misalignment. The hydraulic inserts within the tool joints can be made so that the opposing tool joint cannot contact them during at least the first 80% of thread engagement, even where there is significant angular misalignment. If no contact between these components is possible, then no wear or damage can be causes, greatly improving the reliability of the connection over prior art designs. As set out above and as shown in Figure 5, there is no engagement between the male tool joint and the female hydraulic insert until the male control spool has reached its fully displaced position, at which point the nose of the male tool joint 9 engages with seal 33 on female hydraulic insert 17. Furthermore, because minimal cross-sectional area is taken up by the control spools, the hydraulic inserts may be made very strong, with a cross sectional area and bending strength that is comparable to that of the tool joints. This further enhances reliability. The area available to each flow path, at the tool joints, can be kept as high as 20% of the total internal cross-sectional area of the tool joint, without compromising reliability. This reduces pressure losses at each connection between adjacent drill rods.

The use of a face seal instead of a radial seal at the pressure flow path connection provides a number of further advantages. It is far less susceptible to damage or wear during engagement, since there is no movement of components over the seal. It can tolerate significant parallel misalignment, and more angular misalignment that a radial seal. The surface of the female control spool stop that engages the seal never touches any other component, even when the connection is misaligned. This ensures that it cannot suffer wear or damage that might affect the reliability of the seal between the spool stops. The (slight) axial movement of the spool stops 26, 27 to contact each other while under pressure ensures that the face seal 34 operates with no extrusion gap, enhancing its reliability further.

The radial seal 33 in the outer wall of the hydraulic insert 17 is subjected to low pressure return fluid only, and its engagement length with the male tool joint is very short, approximately 10% of the rod diameter. This improves the reliability of the seal, since the male tool joint moves over the seal for only a small portion of the overall thread engagement length.

Because the end pieces of tubes 4 and 5 are received within radial seals and are not fixed in place, the design allows for differential thermal expansion of these components.

The drill rod is fully modular and each component can be individually replaced, as necessary.

The concentric tube structure ensures that any small amounts of fluid that leak from the pressure channel during operation are fully contained in the return channel, thereby ensuring that no working fluid is lost. This arrangement also contains the working fluid in the event of a seal failure anywhere in the pressure channel.

## Claims

1. A drill rod (2) for a fluid-operated apparatus (1), the drill rod comprising:
a first connection interface (100) at a first end (101) and a second connection interface (102) at a second end (103), wherein the first connection interface is for connection of the drill rod to a second connection interface (102) of a like drill rod (3) or to the fluid-operated apparatus (1), and the second connection interface is for connection of the drill rod to a first connection interface (100) of a like drill rod (3) or to a fluid transfer device;
a plurality of discrete fluid flow channels (4, 6, 8) through the drill rod, including at least a pressure fluid channel (4) and a return fluid channel (6);
at least one hydraulic component (27) in the first connection interface, wherein the hydraulic component is a component having a pressure fluid path therethrough and having an outlet for pressure fluid at an outwardly directed end thereof, wherein the term outward indicates outward in an axial direction of the drill rod, and wherein the hydraulic component in the first connection interface has a first planar end face; and
at least one hydraulic component (26) in the second connection interface, wherein the hydraulic component is a component having a pressure fluid path therethrough and having an inlet for pressure fluid at an outwardly directed end thereof, and wherein the hydraulic component in the second connection interface has a second planar end face;
wherein the pressure fluid path in the at least one hydraulic component in the first connection interface and the pressure fluid path in the at least one hydraulic component in the second connection interface form part of the pressure fluid channel; and
wherein when the drill rod is connected to a like drill rod, the outlet for pressure fluid of the at least one hydraulic component in the first connection interface is placed in fluid communication with the inlet for pressure fluid of the at least one hydraulic component in the second connection interface of the like drill rod, the return fluid flow channel is placed in fluid communication with corresponding channel of the like drill rod or the fluid-operated apparatus or the fluid transfer device and the first planar end face of the drill rod is in close proximity to the second planar end face of the like drill rod, and
**characterised in that** a face seal (34) is provided on at least one of the first and second planar end faces wherein, when a pressure in the pressure fluid channel is higher than a pressure in the return fluid channel, at least one of the first and second hydraulic components moves in an axial direction such that the first planar end face of the first hydraulic component in the drill rod is maintained in contact with the second planar end face of the second hydraulic component of the first like drill rod or the fluid-operated apparatus;
the drill rod further comprising:
a first member (23) moveably mounted in the first connection interface;
a second member (22) moveably mounted in the second connection interface;
wherein the first moveable member is the innermost component in the first connection interface and the second moveable member is the innermost component in the second connection interface and, when the drill rod is connected to the like drill rod or to the fluid-operated apparatus or to the fluid transfer device, the fluid flow channels are placed in fluid communication with corresponding channels of the like drill rod or the fluid-operated apparatus or the fluid transfer device by movement of the first and second moveable members only.

2. A drill rod as claimed in claim 1, wherein the at least one face seal is provided in an annular recess on the first or second planar end face.

3. A drill rod as claimed in claim 1 or claim 2, wherein the face seal encircles at least one of the outlet for pressure fluid or the inlet for pressure fluid.

4. A drill rod as claimed in claim 1, wherein when the drill rod is connected to the like drill rod or to the fluid-operated apparatus, there is no overlap between the moveable members in an axial direction of the drill rod.

5. A drill rod as claimed in claim 1, wherein the first moveable member is biasedly mounted in the first connection interface and the second moveable member is biasedly mounted in the second connection interface, such that when the drill rod is disconnected from the like drill rod or from the fluid-operated apparatus or from the fluid transfer device, the fluid flow channels are sealed by the first and second moveable members.

6. A drill rod as claimed in any of claims 1 to 5, wherein the plurality of discrete fluid flow channels are concentrically arranged over at least a portion of the length of the drill rod.

7. A drill rod as claimed in any of claims 1 to 6, wherein when the drill rod is disconnected from a like drill rod or the fluid-operated apparatus or the fluid transfer device, the pressure and return fluid flow channels are sealed by the first and second moveable members.

8. A drill rod as claimed in any preceding claim, further comprising:
an outer tube (7);
a middle tube (5), concentrically mounted within the outer tube; and
a centre tube (4), concentrically mounted within the middle tube;
wherein the tubes provide three discrete fluid flow channels through the drill rod, and wherein the outer tube extends axially beyond the ends of the middle tube and the centre tube.

9. A drill rod as claimed in claim 8, wherein the first connection interface includes a female tool joint (10) having a tapered thread at a first end of the outer tube and the second connection interface includes a male tool joint (9) having a tapered thread at a second end of the outer tube, and wherein the female tool joint is for threaded connection of the drill rod to a male tool joint of a like drill rod or to the fluid-operated apparatus, and the male tool joint is for threaded connection to a female tool joint of a like drill rod or to a fluid transfer device.

10. A drill rod as claimed in claim 8, wherein the first connection interface includes a male tool joint (9) having a tapered thread at a first end of the outer tube and the second connection interface includes a female tool joint (10) having a tapered thread at a second end of the outer tube, and wherein the male tool joint is for threaded connection of the drill rod to a female tool joint of a like drill rod or to the fluid-operated apparatus, and the female tool joint is for threaded connection to a male tool joint of a like drill rod or to a fluid transfer device.

## Patentansprüche

1. Eine Bohrstange (2) für eine fluidbetriebene Vorrichtung (1), wobei die Bohrstange Folgendes aufweist:
eine erste Verbindungsschnittstelle (100) an einem ersten Ende (101) und eine zweite Verbindungsschnittstelle (102) an einem zweiten Ende (103), wobei die erste Verbindungsschnittstelle zur Verbindung der Bohrstange mit einer zweiten Verbindungsschnittstelle (102) einer gleichartigen Bohrstange (3) oder mit der fluidbetriebenen Vorrichtung (1) dient, und wobei die zweite Verbindungsschnittstelle zur Verbindung der Bohrstange mit einer ersten Verbindungsschnittstelle (100) einer gleichartigen Bohrstange (3) oder mit einer Fluidtransfereinrichtung dient;
eine Vielzahl von diskreten Fluidströmungskanälen (4, 6, 8) durch die Bohrstange, einschließlich mindestens eines Druckfluidkanals (4) und eines Rücklauffluidkanals (6);
mindestens eine hydraulische Komponente (27) in der ersten Verbindungsschnittstelle, wobei die hydraulische Komponente eine Komponente ist, die einen Druckfluidpfad durch sie hindurch und einen Auslass für Druckfluid an einem nach außen gerichteten Ende von ihr aufweist, wobei der Begriff nach außen in einer axialen Richtung der Bohrstange nach außen bedeutet, und wobei die hydraulische Komponente in der ersten Verbindungsschnittstelle eine erste ebene Endfläche aufweist; und
mindestens eine hydraulische Komponente (26) in der zweiten Verbindungsschnittstelle, wobei die hydraulische Komponente eine Komponente ist, die einen Druckfluidpfad durch sie hindurch aufweist und die einen Einlass für Druckfluid an einem nach außen gerichteten Ende von ihr aufweist, und wobei die hydraulische Komponente in der zweiten Verbindungsschnittstelle eine zweite ebene Endfläche aufweist;
wobei der Druckfluidweg in der mindestens einen hydraulischen Komponente in der ersten Verbindungsschnittstelle und der Druckfluidweg in der mindestens einen hydraulischen Komponente in der zweiten Verbindungsschnittstelle einen Teil des Druckfluidkanals bilden; und
wobei, wenn die Bohrstange mit einer gleichartigen Bohrstange verbunden ist, der Auslass für Druckfluid der mindestens einen Hydraulikkomponente in der ersten Verbindungsschnittstelle in Fluidverbindung mit dem Einlass für Druckfluid der mindestens einen Hydraulikkomponente in der zweiten Verbindungsschnittstelle der gleichartigen Bohrstange platziert ist, wobei der Rücklauffluidkanal in Fluidverbindung mit einem entsprechenden Kanal der gleichartigen Bohrstange oder der fluidbetriebenen Vorrichtung oder der Fluidtransfereinrichtung platziert ist, und wobei sich die erste ebene Endfläche der Bohrstange in unmittelbarer Nähe der zweiten ebenen Endfläche der gleichartigen Bohrstange befindet, und
**dadurch gekennzeichnet, dass** eine Flächendichtung (34) an mindestens einer der ersten und zweiten ebenen Endflächen vorgesehen ist, wobei sich, wenn ein Druck in dem Druckfluidkanal höher ist als ein Druck in dem Rücklauffluidkanal, mindestens eine der ersten und zweiten hydraulischen Komponenten in einer axialen Richtung bewegt, und zwar so dass die erste ebene Endfläche der ersten hydraulischen Komponente in der Bohrstange in Kontakt mit der zweiten ebenen Endfläche der zweiten hydraulischen Komponente der ersten gleichartigen Bohrstange oder der fluidbetriebenen Vorrichtung gehalten wird;
wobei die Bohrstange ferner Folgendes aufweist:
ein erstes Element (23), das bewegbar in der ersten Verbindungsschnittstelle angebracht ist;
ein zweites Element (22), das bewegbar in der zweiten Verbindungsschnittstelle angebracht ist;
wobei das erste bewegbare Element die innerste Komponente in der ersten Verbindungsschnittstelle ist und wobei das zweite bewegbare Element die innerste Komponente in der zweiten Verbindungsschnittstelle ist und wobei, wenn die Bohrstange mit der gleichartigen Bohrstange oder der fluidbetriebenen Vorrichtung oder der Fluidtransfereinrichtung verbunden ist, die Fluidströmungskanäle in Fluidverbindung mit entsprechenden Kanälen der gleichartigen Bohrstange oder der fluidbetriebenen Vorrichtung oder der Fluidtransfereinrichtung nur durch Bewegung des ersten und zweiten bewegbaren Elements gebracht werden.

2. Eine Bohrstange nach Anspruch 1, wobei die mindestens eine Flächendichtung in einer ringförmigen Ausnehmung an der ersten oder der zweiten ebenen Endfläche vorgesehen ist.

3. Eine Bohrstange nach Anspruch 1 oder 2, wobei die Endflächendichtung zumindest einen der Folgenden umschließt: den Auslass für Druckfluid oder den Einlass für Druckfluid.

4. Eine Bohrstange nach Anspruch 1, wobei sich die bewegbaren Elemente in einer axialen Richtung der Bohrstange nicht überlappen, wenn die Bohrstange mit der gleichartigen Bohrstange oder mit der fluidbetriebenen Vorrichtung verbunden ist.

5. Eine Bohrstange nach Anspruch 1, wobei das erste bewegbare Element vorgespannt in der ersten Verbindungsschnittstelle angebracht ist und wobei das zweite bewegbare Element in der zweiten Verbindungsschnittstelle vorgespannt angebracht ist, und zwar so dass die Fluidströmungskanäle durch das erste und das zweite bewegbare Element abgedichtet sind, wenn die Bohrstange von der gleichartigen Bohrstange oder von der fluidbetriebenen Vorrichtung oder von der Fluidtransfereinrichtung getrennt ist.

6. Eine Bohrstange nach einem der Ansprüche 1 bis 5, wobei die Vielzahl von diskreten Fluidströmungskanälen über mindestens einen Teil der Länge der Bohrstange konzentrisch angeordnet ist.

7. Eine Bohrstange nach einem der Ansprüche 1 bis 6, wobei die Druck- und Rücklauffluidströmungskanäle durch das erste und das zweite bewegbare Element abgedichtet werden, wenn die Bohrstange von einer gleichartigen Bohrstange oder der fluidbetriebenen Vorrichtung oder der Fluidtransfereinrichtung getrennt ist.

8. Eine Bohrstange nach einem der vorhergehenden Ansprüche, die ferner Folgendes aufweist:
ein äußeres Rohr (7);
ein mittleres Rohr (5), das konzentrisch innerhalb des äußeren Rohrs angebracht ist; und
ein zentrales Rohr (4), das konzentrisch innerhalb des mittleren Rohrs angebracht ist;
wobei die Rohre drei diskrete Fluidströmungskanäle durch die Bohrstange bereitstellen, und
wobei sich das äußere Rohr axial über die Enden des mittleren Rohrs und des zentralen Rohrs hinaus erstreckt.

9. Eine Bohrstange nach Anspruch 8, wobei die erste Verbindungsschnittstelle eine Werkzeugbuchse bzw. einen weiblichen Werkzeuganschluss (10) mit einem sich verjüngenden Gewinde an einem ersten Ende des äußeren Rohrs beinhaltet und wobei die zweite Verbindungsschnittstelle einen Werkzeugstecker bzw. männlichen Werkzeuganschluss (9) mit einem sich verjüngenden Gewinde an einem zweiten Ende des äußeren Rohrs aufweist, und wobei die Werkzeugbuchse zur Schraubverbindung der Bohrstange mit einem Werkzeugstecker einer gleichartigen Bohrstange oder mit der fluidbetriebenen Vorrichtung dient, und wobei der Werkzeugstecker zur Schraubverbindung mit einer Werkzeugbuchse einer gleichartigen Bohrstange oder mit einer Fluidtransfereinrichtung dient.

10. Eine Bohrstange nach Anspruch 8, wobei die erste Verbindungsschnittstelle einen Werkzeugstecker bzw. männlichen Werkzeuganschluss (9) mit einem sich verjüngenden Gewinde an einem ersten Ende des äußeren Rohrs beinhaltet und wobei die zweite Verbindungsschnittstelle eine Werkzeugbuchse bzw. einen weiblichen Werkzeuganschluss (10) mit einem sich verjüngenden Gewinde an einem zweiten Ende des äußeren Rohrs aufweist, und wobei der Werkzeugstecker zur Schraubverbindung der Bohrstange mit einer Werkzeugbuchse einer gleichartigen Bohrstange oder mit der fluidbetriebenen Vorrichtung dient und wobei die Werkzeugbuchse zur Schraubverbindung mit einem Werkzeugstecker einer gleichartigen Bohrstange oder mit einer Fluidtransfereinrichtung dient.

## Revendications

1. Tige de forage (2) pour un appareil actionné par fluide (1), la tige de forage comprenant :
une première interface de connexion (100) au niveau d'une première extrémité (101) et une deuxième interface de connexion (102) au niveau d'une deuxième extrémité (103), dans laquelle la première interface de connexion est destinée à connecter la tige de forage avec une deuxième interface de connexion (102) d'une tige de forage similaire (3) ou avec l'appareil actionné par fluide (1), et la deuxième interface de connexion est destinée à connecter la tige de forage avec une première interface de connexion (100) d'une tige de forage similaire (3) ou avec un dispositif de transfert de fluide ;
une pluralité de canaux d'écoulement de fluide distincts (4, 6, 8) à travers la tige de forage, comportant au moins un canal de fluide sous pression (4) et un canal de fluide de retour (6) ;
au moins un composant hydraulique (27) dans la première interface de connexion, dans laquelle le composant hydraulique est un composant ayant une voie du fluide sous pression le traversant et ayant un échappement pour un fluide sous pression au niveau d'une extrémité dirigée vers l'extérieur de celui-ci, dans laquelle le terme vers l'extérieur indique vers l'extérieur dans une direction axiale de la tige de forage, et dans laquelle le composant hydraulique dans la première interface de connexion a une première face d'extrémité plane ; et
au moins un composant hydraulique (26) dans la deuxième interface de connexion, dans laquelle le composant hydraulique est un composant ayant une voie du fluide sous pression le traversant et ayant une admission pour un fluide sous pression au niveau d'une extrémité dirigée vers l'extérieur de celui-ci, et dans laquelle le composant hydraulique dans la deuxième interface de connexion a une deuxième face d'extrémité plane ;
dans laquelle la voie du fluide sous pression dans l'au moins un composant hydraulique dans la première interface de connexion et la voie du fluide sous pression dans l'au moins un composant hydraulique dans la deuxième interface de connexion constituent une partie du canal de fluide sous pression ; et
dans laquelle la tige de forage est connectée à une tige de forage similaire, l'échappement pour un fluide sous pression de l'au moins un composant hydraulique dans la première interface de connexion est placé en communication fluidique avec l'admission pour un fluide sous pression de l'au moins un composant hydraulique dans la deuxième interface de connexion de la tige de forage similaire, le canal d'écoulement du fluide de retour est placé en communication fluidique avec le canal correspondant de la tige de forage similaire ou de l'appareil actionné par fluide ou du dispositif de transfert de fluide et la première face d'extrémité plane de la tige de forage est à proximité immédiate de la deuxième face d'extrémité plane de la tige de forage similaire, et
**caractérisée en ce qu'**un joint de face (34) est prévu sur au moins une des première et deuxième faces d'extrémité planes, dans laquelle, lorsqu'une pression dans le canal du fluide sous pression est supérieure à une pression dans le canal du fluide de retour, au moins un parmi les premier et deuxième composants hydrauliques se déplace dans une direction axiale de sorte que la première face d'extrémité plane du premier composant hydraulique dans la tige de forage soit maintenue en contact avec la deuxième face d'extrémité plane du deuxième composant hydraulique de la première tige de forage similaire ou de l'appareil actionné par fluide ;
la tige de forage comprenant en outre :
un premier élément (23) monté mobile dans la première interface de connexion ;
un deuxième élément (22) monté mobile dans la deuxième interface de connexion ;
dans laquelle le premier élément mobile est le composant le plus à l'intérieur dans la première interface de connexion et le deuxième élément mobile est le composant le plus à l'intérieur dans la deuxième interface de connexion et, lorsque la tige de forage est connectée à la tige de forage similaire ou à l'appareil actionné par fluide ou au dispositif de transfert de fluide, les canaux d'écoulement de fluide sont placés en communication fluidique avec des canaux correspondants de la tige de forage similaire ou de l'appareil actionné par fluide ou du dispositif de transfert de fluide uniquement par le mouvement des premier et deuxième éléments mobiles.

2. Tige de forage selon la revendication 1, dans laquelle l'au moins un joint de face est prévu dans un évidement annulaire sur la première ou la deuxième face d'extrémité plane.

3. Tige de forage selon la revendication 1 ou la revendication 2, dans laquelle le joint de face encercle au moins un parmi l'échappement pour le fluide sous pression ou l'admission pour le fluide sous pression.

4. Tige de forage selon la revendication 1, dans laquelle, lorsque la tige de forage est connectée à la tige de forage similaire ou à l'appareil actionné par fluide, il n'y a aucun chevauchement entre les éléments mobiles dans une direction axiale de la tige de forage.

5. Tige de forage selon la revendication 1, dans laquelle le premier élément mobile est monté de façon sollicitée dans la première interface de connexion et le deuxième élément mobile est monté de façon sollicitée dans la deuxième interface de connexion, de sorte que, lorsque la tige de forage est déconnectée de la tige de forage similaire ou de l'appareil actionné par fluide ou du dispositif de transfert de fluide, les canaux d'écoulement de fluide soient scellés par les premier et deuxième éléments mobiles.

6. Tige de forage selon l'une quelconque des revendications 1 à 5, dans laquelle la pluralité de canaux d'écoulement de fluide distincts sont agencés concentriquement sur au moins une partie de la longueur de la tige de forage.

7. Tige de forage selon l'une quelconque des revendications 1 à 6, dans laquelle, lorsque la tige de forage est déconnectée d'une tige de forage similaire ou de l'appareil actionné par fluide ou du dispositif de transfert de fluide, les canaux d'écoulement des fluides sous pression ou de retour sont scellés par les premier et deuxième éléments mobiles.

8. Tige de forage selon l'une quelconque des revendications précédentes, comprenant en outre :
un tube extérieur (7) ;
un tube milieu (5), monté concentriquement à l'intérieur du tube extérieur ; et
un tube central (4), monté concentriquement à l'intérieur du tube milieu ;
dans laquelle les tubes fournissent trois canaux distincts d'écoulement de fluide à travers la tige de forage, et dans laquelle le tube extérieur s'étend axialement au-delà des extrémités du tube milieu et du tube central.

9. Tige de forage selon la revendication 8, dans laquelle la première interface de connexion comporte un joint d'outil femelle (10) ayant un filetage conique au niveau d'une première extrémité du tube extérieur et la deuxième interface de connexion comporte un joint d'outil mâle (9) ayant un filetage conique au niveau d'une deuxième extrémité du tube extérieur, et dans laquelle le joint d'outil femelle est destiné à une connexion filetée de la tige de forage avec une tige d'outil mâle d'une tige de forage similaire ou avec l'appareil actionné par fluide, et le joint d'outil mâle est destiné à une connexion filetée avec un joint d'outil femelle d'une tige de forage similaire ou avec un dispositif de transfert de fluide.

10. Tige de forage selon la revendication 8, dans laquelle la première interface de connexion comporte un joint d'outil mâle (10) ayant un filetage conique au niveau d'une première extrémité du tube extérieur et la deuxième interface de connexion comporte un joint d'outil femelle (9) ayant un filetage conique au niveau d'une deuxième extrémité du tube extérieur, et dans laquelle le joint d'outil mâle est destiné à une connexion filetée de la tige de forage avec une tige d'outil femelle d'une tige de forage similaire ou avec l'appareil actionné par fluide, et le joint d'outil femelle est destiné à une connexion filetée avec un joint d'outil mâle d'une tige de forage similaire ou avec un dispositif de transfert de fluide.
